(19) Europäisches Patentamt
European Patent Office
Office européen des brevets

(11) **EP 4 780 025 A1**

(12) **EUROPEAN PATENT APPLICATION**
published in accordance with Art. 153(4) EPC

(43) Date of publication:
**22.07.2026 Bulletin 2026/30**

(21) Application number: **24870541.0**

(22) Date of filing: **19.09.2024**

(51) International Patent Classification (IPC):
**H04W 4/02** (2018.01)

(52) Cooperative Patent Classification (CPC):
**H04W 4/02; H04W 24/02; H04W 24/08**

(86) International application number:
**PCT/CN2024/119568**

(87) International publication number:
**WO 2025/066997 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.09.2023 CN 202311290092**

(71) Applicant: **HUAWEI TECHNOLOGIES CO., LTD.
Shenzhen 518129 (CN)**

(72) Inventors:
• **LI, Bing**
  **Shenzhen, Guangdong 518129 (CN)**
• **XIE, Xi**
  **Shenzhen, Guangdong 518129 (CN)**

(74) Representative: **Pfenning, Meinig & Partner mbB
Patent- und Rechtsanwälte
Theresienhöhe 11a
80339 München (DE)**

(54) **MEASUREMENT METHOD AND MEASUREMENT APPARATUS**

(57) This application provides a measurement method and a measurement apparatus. The method includes: performing or skipping performing measurement on a target frequency channel number depending on whether a distance between a terminal device and at least one cell at the target frequency channel number satisfies a distance condition, where the target frequency channel number is different from a first frequency channel number, the first frequency channel number is a frequency channel number of a serving cell of the terminal device, the target frequency channel number is any one of a plurality of frequency channel numbers, and the plurality of frequency channel numbers are frequency channel numbers indicated by system information. The solution provided in this application can reduce a measurement power waste of the terminal device.

Perform or skip performing measurement on a target frequency channel number depending on whether a distance between a terminal device and at least one cell at the target frequency point satisfies a distance condition, where the target frequency channel number is different from a first frequency channel number, the first frequency channel number is a frequency channel number of a serving cell of the terminal device, the target frequency channel number is any one of a plurality of frequency channel numbers, and the plurality of frequency channel numbers are frequency channel numbers indicated by system information

210

FIG. 2

**Description**

This application claims priority to Chinese Patent Application No. 202311290092.7, filed with the China National Intellectual Property Administration on September 28, 2023 and entitled "MEASUREMENT METHOD AND MEASUREMENT APPARATUS", which is incorporated herein by reference in its entirety.

**TECHNICAL FIELD**

This application relates to the communication field, and in particular, to a measurement method and a measurement apparatus.

**BACKGROUND**

In a non-terrestrial network (non-terrestrial network, NTN), a distance-based threshold is introduced for measurement starting policies of a terminal device in an idle state and a terminal device in an inactive state. Specifically, based on a relationship between a measurement frequency channel number and a frequency channel number of a serving cell, measurement may be classified into intra-frequency measurement (intra-frequency measurement), inter-frequency measurement (inter-frequency measurement), and inter-system measurement (inter-RAT measurement).

A terminal device consumes power during frequency channel number measurement, and especially, measurement on an inter-frequency frequency channel number and measurement on an inter-system frequency channel number lead to a significant power waste of the terminal device. How to reduce the power waste of the terminal device is a problem that needs to be resolved.

**SUMMARY**

This application provides a measurement method and a measurement apparatus, to reduce a measurement power waste of a terminal device.

According to a first aspect, a measurement method is provided. The method is applied to a terminal device or an apparatus (for example, a chip) used in the terminal device, and the method includes: performing or skipping performing measurement on a target frequency channel number depending on whether a distance between the terminal device and at least one cell at the target frequency channel number satisfies a distance condition, where the target frequency channel number is different from a first frequency channel number, the first frequency channel number is a frequency channel number of a serving cell of the terminal device, the target frequency channel number is any one of a plurality of frequency channel numbers, and the plurality of frequency channel numbers are frequency channel numbers indicated by system information.

In this embodiment of this application, the terminal device performs or skips performing measurement on the target frequency channel number depending on whether the distance between the terminal device and the at least one cell at the target frequency channel number satisfies the distance condition, where the target frequency channel number is different from the frequency channel number of the serving cell of the terminal device. In other words, for measurement on an inter-frequency frequency channel number or an inter-system frequency channel number, the terminal device performs or skips performing measurement on the target frequency channel number based on a related distance condition of a cell at the target frequency channel number, and does not perform measurement on another unrelated frequency channel number other than the target frequency channel number, thereby reducing a measurement power waste of the terminal device.

With reference to the first aspect, in a possible implementation, the performing or skipping performing measurement on the target frequency channel number depending on whether the distance between the terminal device and the at least one cell at the target frequency channel number satisfies the distance condition includes: performing or skipping performing measurement on the target frequency channel number in the plurality of frequency channel numbers only depending on whether the distance between the terminal device and the at least one cell at the target frequency channel number satisfies the distance condition.

In this embodiment of this application, the terminal device specifically determines, only depending on whether the distance between the terminal device and the at least one cell at the target frequency channel number satisfies the distance condition, whether to perform measurement on the target frequency channel number in the plurality of frequency channel numbers. In the solution in this embodiment of this application, an object compared with the distance condition is the at least one cell at the target frequency channel number, but not cells at all frequency channel numbers. This can improve measurement efficiency of the terminal device for the target frequency channel number.

With reference to the first aspect, in a possible implementation, the performing or skipping performing measurement on the target frequency channel number depending on whether the distance between the terminal device and the at least one cell at the target frequency channel number satisfies the distance condition includes: if the distance condition is satisfied, skipping performing measurement on the target frequency channel number; or if the distance condition is not satisfied, performing measurement on the target frequency channel number; and the distance condition includes: A difference between a first distance and a second distance is less than a first threshold, where the first distance is a distance between the terminal device and a first reference point of the serving cell, and the second distance is a distance between the terminal device and a second reference point of the cell at the target frequency channel number.

In this embodiment of this application, the distance condition includes that the difference between the first distance and the second distance is less than the first threshold. Because the second distance is the distance between the terminal device and the second reference point of the cell at the target frequency channel number, the terminal device performs or skips performing measurement on the target frequency channel number based on the distance condition, and does not perform measurement on another unrelated frequency channel number other than the target frequency channel number, thereby reducing a measurement power waste of the terminal device.

With reference to the first aspect, in a possible implementation, the second distance is a distance between the terminal device and the second reference points of all cells at the target frequency channel number; or the second distance is a distance between the terminal device and the second reference point of each cell at the target frequency channel number.

With reference to the first aspect, in a possible implementation, the first reference point is at least one of the following: a subsatellite point of a satellite of the serving cell, a central point of the serving cell, and the first reference point configured by a network device; and the second reference point is at least one of the following: a subsatellite point of a satellite of the cell at the target frequency channel number, a central point of the cell at the target frequency channel number, and the second reference point configured by the network device.

With reference to the first aspect, in a possible implementation, the performing or skipping performing measurement on the target frequency channel number depending on whether the distance between the terminal device and the at least one cell at the target frequency channel number satisfies the distance condition includes: when a quality condition is satisfied, performing or skipping performing measurement on the target frequency channel number depending on whether the distance between the terminal device and the at least one cell at the target frequency channel number satisfies the distance condition and the quality condition includes: A receiving level value of the serving cell is greater than a second threshold, and a quality value of the serving cell is greater than a third threshold.

In this embodiment of this application, when the quality condition is satisfied, the terminal device further performs or skips performing measurement on the target frequency channel number depending on whether the distance between the terminal device and the at least one cell at the target frequency channel number satisfies the distance condition. This can improve accuracy of controlling, by the terminal device, starting of neighbor cell measurement, thereby increasing a success rate of cell reselection performed by the terminal device.

With reference to the first aspect, in a possible implementation, the target frequency channel number is an inter-frequency frequency channel number or an inter-system frequency channel number.

With reference to the first aspect, in a possible implementation, a priority of the first frequency channel number is higher than or equal to a priority of the target frequency channel number.

With reference to the first aspect, in a possible implementation, the first threshold is carried in the system information.

With reference to the first aspect, in a possible implementation, the second threshold and/or the third threshold are/is carried in the system information.

With reference to the first aspect, in a possible implementation, the performing or skipping performing measurement on the target frequency channel number depending on whether the distance between the terminal device and the at least one cell at the target frequency channel number satisfies the distance condition includes: periodically performing or skipping performing measurement on the target frequency channel number depending on whether the distance between the terminal device and the at least one cell at the target frequency channel number satisfies the distance condition.

In this embodiment of this application, the terminal device periodically performs or skips performing measurement on the target frequency channel number based on the distance condition, so that a power waste of the terminal device can be reduced, and the terminal device can select a cell with better signal quality when performing cell reselection.

With reference to the first aspect, in a possible implementation, the periodically performing or skipping performing measurement on the target frequency channel number depending on whether the distance between the terminal device and the at least one cell at the target frequency channel number satisfies the distance condition includes: when measurement on the target frequency channel number is performed in a first periodicity, if it is determined, in a second periodicity, that the distance between the terminal device and the at least one cell at the target frequency channel number satisfies the distance condition, stopping performing measurement on the target frequency channel number, where a start moment of the second periodicity is an end moment of the first periodicity.

In this embodiment of this application, when the terminal device performs measurement on the target frequency channel number in the first periodicity, the terminal device may not complete measurement on all cells at the target frequency channel number by the end of the first periodicity. At the start moment of the second periodicity, when the terminal device determines that the distance between the terminal device and the at least one cell at the target frequency channel number satisfies the distance condition, the terminal device may stop performing measurement on the target frequency channel number, thereby further reducing a power waste of the terminal device.

With reference to the first aspect, in a possible implementation, the periodically performing or skipping performing measurement on the target frequency channel number based on the preset distance condition includes: when measurement on the target frequency channel number is not performed in a third periodicity, if it is determined, in a fourth periodicity, that the distance between the terminal device and the at least one cell at the target frequency channel number does not satisfy the distance condition, performing measurement on the target frequency channel number, where a start moment of the fourth periodicity is an end moment of the third periodicity.

In this embodiment of this application, when the terminal device skips performing measurement on the target frequency channel number in the third periodicity, the terminal device may determine, at the end moment of the third periodicity, that the distance between the terminal device and the cell at the target frequency channel number does not satisfy the distance condition. In this case, the terminal device may perform measurement on the target frequency channel number, so that the terminal device can select a cell with better signal quality.

According to a second aspect, a measurement apparatus is provided. The measurement apparatus includes a corresponding module or unit for performing the method according to any one of the possible implementations in the first aspect.

According to a third aspect, a measurement apparatus is provided, including one or more processors. When the processor executes computer instructions, the apparatus is caused to perform the method according to any one of the possible implementations in the first aspect.

With reference to the third aspect, in a possible implementation, the apparatus further includes one or more storages, the processor is coupled to the storage, and the storage stores the computer instructions.

According to a fourth aspect, a computer-readable storage medium is provided, including computer instructions. When the computer instructions are run on an electronic device, the electronic device is caused to perform the method according to any one of the possible implementations in the first aspect.

According to a fifth aspect, a computer program product is provided. When the computer program product runs on an electronic device, the electronic device is caused to perform the method according to any one of the possible designs in the first aspect.

## BRIEF DESCRIPTION OF DRAWINGS

FIG. 1 is a diagram of a wireless communication system to which an embodiment of this application is applicable;
FIG. 2 is a diagram of a measurement method according to an embodiment of this application;
FIG. 3 is a diagram of determining, by a terminal device based on a distance condition, whether to measure quality according to this application;
FIG. 4 is a diagram of another measurement method according to an embodiment of this application;
FIG. 5 is a diagram of still another measurement method according to an embodiment of this application;
FIG. 6 is a diagram of a measurement apparatus according to an embodiment of this application; and
FIG. 7 is a diagram of another measurement apparatus according to an embodiment of this application.

## DESCRIPTION OF EMBODIMENTS

The following describes technical solutions of this application with reference to accompanying drawings.

For ease of understanding the solutions of this application, the following first briefly describes terms that may be used.

A radio resource control (radio resource control, RRC) status of a terminal device includes three types: an RRC idle (idle) state, an RRC connected (connected) state, and an RRC inactive (inactive) state.

For a terminal device in the RRC idle state, it indicates that no RRC connection is established between the terminal device and a base station, data transmission cannot be performed between the terminal device and the base station, there is no RRC context, and there is no core network connection.

For a terminal device in the RRC connected state and a terminal device in the RRC inactive state, it indicates that RRC connections has been established between the terminal devices and the base station. However, data transmission may be performed between the terminal device in the RRC connected state and the base station, an RRC context has been established, and a core network connection has been established. Data transmission cannot be performed between the terminal device in the RRC inactive state and the base station, but an RRC context has been established, and a core network connection has been established.

The technical solutions in embodiments of this application may be applied to various communication systems such as a long term evolution (long term evolution, LTE) system, an LTE frequency division duplex (frequency division duplex, FDD) system, an LTE time division duplex (time division duplex, TDD) system, a 5th generation (5th generation, 5G) mobile communication system or a new radio (new radio, NR) communication system, and a future mobile communication system.

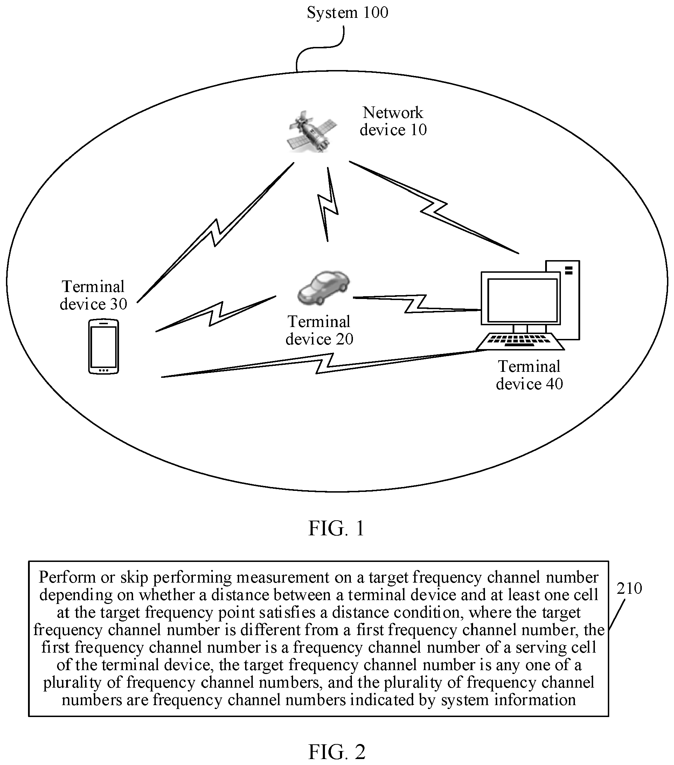

FIG. 1 is a diagram of wireless communication system 100 to which an embodiment of this application is applicable. As shown in FIG. 1, the wireless communication system 100 may include one or more network devices, for example, a network device 10 shown in FIG. 1. The wireless communication system 100 may further include one or more terminal devices (which may also be referred to as user equipment (user equipment, UE)), for example, a terminal device 20, a terminal device 30, and a terminal device 40 shown in FIG. 1. The three terminal devices, namely, the terminal device 20, the terminal device 30, and the terminal device 40 may communicate with each other.

It should be understood that FIG. 1 is merely a diagram. The communication system may further include another network device, for example, may further include a core network device, a wireless relay device, and a wireless backhaul device, which are not shown in FIG. 1. A quantity of network devices and a quantity of terminal devices included in the mobile communication system are not limited in embodiments of this application.

In the mobile communication system 100, the terminal device 20, the terminal device 30, or the terminal device 40 in embodiments of this application may also be referred to as a terminal, a terminal device, a mobile station (mobile station, MS), a mobile terminal (terminal mobile, MT), or the like. The terminal device in embodiments of this application may be a mobile phone (mobile phone), a tablet (Pad), or a computer with a wireless transceiver function, or may be a wireless terminal used in scenarios such as virtual reality (virtual reality, VR), augmented reality (augmented reality, AR), industrial control (industrial control), self-driving (self-driving), telemedicine (remote medical), smart grid (smart grid), transportation safety (transportation safety), smart city (smart city), smart home (smart home), and the like. In this application, the terminal device and a chip that can be used in the terminal device are collectively referred to as a terminal device. It should be understood that a specific technology and a specific device form used by the terminal device are not limited in embodiments of this application.

The network device 10 in embodiments of this application may be a device configured to communicate with the terminal device. The network device may be a satellite network, a base station, an evolved NodeB (evolved NodeB, eNB), a home base station, an access point (access point, AP) in a wireless fidelity (wireless fidelity, Wi-Fi) system, a wireless relay node, a wireless backhaul node, a transmission point (transmission point, TP), a transmission and reception point (transmission and reception point, TRP), or the like, may be a gNB in an NR system, or may be a component or a part of devices that constitute a base station, for example, a central unit (central unit, CU), a distributed unit (distributed unit, DU), or a baseband unit (baseband unit, BBU). It should be understood that a specific technology and a specific device form used for the network device are not limited in embodiments of this application. In this application, the network device may be the network device, or may be a chip used in the network device to complete a wireless communication processing function.

It should be understood that, in embodiments of this application, the terminal device or the network device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as browser, address book, word-processing software, and instant messaging software. In addition, a specific structure of an execution body of the method provided in embodiments of this application is not specifically limited in embodiments of this application, provided that a program that records code of the method provided in embodiments of this application can be run to perform communication according to the method provided in embodiments of this application. For example, the method provided in embodiments of this application may be performed by a terminal device or a functional module that is in a terminal device and that can invoke and execute the program.

In addition, aspects or features of this application may be implemented as a method, an apparatus, or a product that uses standard programming and/or engineering technologies. The term "product" used in this application covers a computer program that can be accessed from any computer-readable component, carrier or medium. For example, the computer-readable storage medium may include, but is not limited to, a magnetic storage device (for example, a hard disk drive, a floppy disk, or a magnetic tape), an optical disc (for example, a compact disc (compact disc, CD), or a digital versatile disc (digital versatile disc, DVD)), a smart card, and a flash storage device (for example, an erasable programmable read-only memory (erasable programmable read-only memory, EPROM), a card, a stick, or a key drive).

In addition, various storage media described in this specification may indicate one or more devices and/or other machine-readable storage media that are configured to store information. The term "machine-readable storage media" may include but is not limited to a radio channel, and various other media that can store, include, and/or carry instructions and/or data.

It should be understood that, division into manners, cases, categories, and embodiments in embodiments of this application are merely for ease of description, and should not constitute a special limitation. Features in various manners, categories, cases, and embodiments may be combined without contradiction.

It should be further understood that "first", "second", and "third" in embodiments of this application are merely for distinguishing, and should not constitute any limitation on this application.

It should be noted that the term "and/or" describes an association relationship between associated objects and indicates that three relationships may exist. For example, A and/or B may indicate the following three cases: Only A exists, both A and B exist, and only B exists. The character "/" generally indicates an "or" relationship between the associated objects.

As described above, the network device may be a satellite network, and the satellite network has advantages such as wide coverage and being less susceptible to impact of natural disasters. The satellite network may be deeply integrated with a terrestrial mobile communication network to compensate for insufficient coverage of the terrestrial mobile network. The satellite network and terrestrial network form a three-dimensional and layered integrated network system with complementary strengths and seamless convergence to implement information transmission and exchange worldwide.

The satellite communication network is based on a satellite-borne platform, mainly including a low earth orbit (low earth orbit, LEO) satellite, a medium earth orbit (medium earth orbit, MEO) satellite, and a geostationary earth orbit (geostationary earth orbit, GEO) satellite. Based on a relationship between the satellite and the base station, there are two architectures: transparent transmission (transparent payload) and regeneration (regenerative payload).

In the transparent transmission architecture, a satellite is only responsible for signal forwarding and has no data processing capability. The base station is located on the ground, and the satellite is connected to the base station through a gateway (gateway) on the ground. Signal transmission is performed between the UE and the base station through the satellite, and a data processing function is still in the base station.

In a renewable architecture, the satellite has all or some functions of the base station, that is, the satellite may perform data processing. Specifically, there are two forms: An entire base station is located on a satellite, and a DU of a base station is located on a satellite.

Based on movement of NTN cells in a ground coverage area, the NTN cells may be classified into three types: earth-fixed (earth-fixed), quasi-earth-fixed (quasi-earth-fixed), and earth-moving (earth-moving).

For the earth-fixed NTN cell, a coverage area of this type of NTN cell is fixed to a specific area on the ground, that is, continuous fixed coverage. For the quasi-earth-fixed NTN cell, a coverage area of this type of NTN cell is fixed to a specific area on the ground within a period of time, and is changed to another area on the ground after a period of time, that is, fixed coverage within a period of time. For the earth-moving NTN cell, a coverage area of this type of NTN cell slides on the ground.

As described above, for the quasi-earth-fixed NTN cell and the earth-moving NTN cell, coverage areas of satellite cells may change on the ground. This involves cell reselection of the terminal device.

For an NTN system, because a near-far effect of a measurement signal is not apparent, the UE cannot properly control starting of measurement in a satellite system according to a signal quality criterion. Consequently, without an accurate measurement result, the UE cannot select a proper cell to camp on, and mobility performance of the UE is affected.

In an NTN, a distance condition is introduced into measurement starting policies of UE in an idle state and UE in an inactive state. Specifically, based on a relationship between a measurement frequency channel number and a frequency channel number of a serving cell, measurement may be classified into intra-frequency measurement, inter-frequency measurement, and inter-system measurement. The inter-system measurement is measurement performed on another system other than a specific system (for example, for a 5G NR system, measurement performed on a 2G/3G/4G (LTE) system is inter-system measurement). The intra-frequency measurement and the inter-frequency measurement are intra-system measurement (intra-RAT measurement).

1. Intra-frequency measurement

(1) When a quality condition is satisfied, if the distance condition is satisfied, the UE may skip performing measurement on an intra-frequency frequency channel number; or if the distance condition is not satisfied, the UE performs measurement on an intra-frequency frequency channel number.
(2) If the quality condition is not satisfied, the UE performs measurement on an intra-frequency frequency channel number.

2. Inter-frequency measurement and inter-system measurement

(1) When a quality condition is satisfied, if a cell at an inter-frequency frequency channel number or an inter-system frequency channel number satisfies the distance condition, the UE skips performing measurement on the inter-frequency frequency channel number or the inter-system frequency channel number; or if a cell at an inter-frequency frequency channel number or an inter-system frequency channel number does not satisfy the distance condition, the UE performs measurement on all inter-frequency frequency channel numbers or inter-system frequency channel numbers.

(2) If a quality condition is not satisfied, the UE performs measurement on all inter-frequency frequency channel numbers and inter-system frequency channel numbers.

As described above, a condition for performing measurement on the inter-frequency frequency channel number or the inter-system frequency channel number when the quality condition is satisfied is as follows: If at least one cell does not satisfy the foregoing distance condition, the terminal device performs signal quality measurement on cells at all the inter-frequency frequency channel numbers or the inter-system frequency channel numbers. However, in this case, performing signal quality measurement on the cells at all the inter-frequency frequency channel numbers or the inter-system frequency channel numbers only based on a distance from a cell at a single inter-frequency frequency channel number or inter-system frequency channel number cannot ensure that signal quality of the cells at all the inter-frequency frequency channel numbers or the inter-system frequency channel numbers can be measured. Consequently, this causes a power waste of the UE.

Based on this, this application provides a measurement method. A measurement granularity is used as a frequency channel number, and signal quality measurement is performed or not performed on a cell at a specific frequency channel number depending on whether the cell at the frequency channel number satisfies a distance condition, so that a measurement power waste of UE can be reduced to some extent.

FIG. 2 is a diagram of a measurement method according to an embodiment of this application. The measurement method may be applied to a terminal device, and the method includes but is not limited to the following steps.

210: Perform or skip performing measurement on a target frequency channel number depending on whether a distance between the terminal device and at least one cell at the target frequency channel number satisfies a distance condition, where the target frequency channel number is different from a first frequency channel number, the first frequency channel number is a frequency channel number of a serving cell of the terminal device, the target frequency channel number is any one of a plurality of frequency channel numbers, and the plurality of frequency channel numbers are frequency channel numbers indicated by system information.

In this embodiment of this application, the first frequency channel number is the frequency channel number of the serving cell of the terminal device. The serving cell of the terminal device may be understood as a cell on which the terminal device camps. The frequency channel number of the serving cell of the terminal device may be understood as a synchronization signal and PBCH block (synchronization signal and PBCH block, SSB) frequency channel number of the serving cell of the terminal device, or a central frequency channel number of the serving cell of the terminal device.

The frequency channel number in this embodiment of this application may also be understood as a frequency. The frequency channel number is a representation of a carrier frequency used in radio communication, and can clearly provide a specific value of a specific frequency. A frequency is a measure of a quantity of electromagnetic oscillations in a complete periodicity of a waveform, and is usually expressed in Hz. The frequency channel number is a number of a fixed frequency. For example, in a GSM900 system, a frequency spacing of a frequency band from 880 MHz to 915 MHz is 200 kHz, and the frequency band from 880 MHz to 915 MHz is divided into 125 radio frequency bands based on the 200 kHz frequency spacing. The 125 radio frequency bands include frequency bands 890 MHz, 890.2 MHz, 890.4 MHz, 890.6 MHz, 890.8 MHz, 891 MHz, ..., and 915 MHz. The 125 radio frequency bands are sequentially numbered 1, 2, 3, 4, 5, ..., 124, and 125. The numbers of these fixed frequencies are frequency channel numbers.

In this embodiment of this application, the target frequency channel number is different from the first frequency channel number. In this embodiment of this application, the target frequency channel number may be an inter-frequency frequency channel number, or may be an inter-system frequency channel number. For example, it is assumed that the frequency channel numbers indicated by the system information include five frequency channel numbers: a frequency channel number 1, a frequency channel number 2, a frequency channel number 3, a frequency channel number 4, and a frequency channel number 5, and the frequency channel number of the serving cell of the terminal device is the frequency channel number 1. In this embodiment of this application, the target frequency channel number is a frequency channel number in the five frequency channel numbers other than the frequency channel number 1, for example, the frequency channel number 2, the frequency channel number 3, the frequency channel number 4, or the frequency channel number 5. In this embodiment of this application, the terminal device may perform or skip performing measurement on the frequency channel number 1 based on a distance condition of a cell at the frequency channel number 1.

In this embodiment of this application, measurement on the target frequency channel number may be measurement on signal quality of the cell at the target frequency channel number, for example, reference signal received power (reference signal received power, RSRP), reference signal received quality (reference signal received quality, RSRQ), signal-to-noise ratio (signal to interference plus noise ratio, SINR), receiving level value (Rx level value) of the serving cell, and quality value (quality value) of the serving cell. A reference signal may be an SSB or another signal. This is not limited.

The receiving level value of the serving cell is abbreviated as Srxlev, and the quality value of the serving cell is abbreviated as Squal.

$$Srxlev=Qrxlevmeas–(Qrxlevmin+Qrxlevminoffset)–Pcompensation–Qoffsettemp$$

$$Squal=Qqualmeas–(Qqualmin+Qqualminoffset)–Qoffsettemp$$

Qrxlevmeas represents a measured cell receiving level value (measured cell RX level value), or may also be referred to as a measured cell received power value. Qrxlevmin represents a minimum required receiving level value in the cell (minimum required RX level in the cell), or may also be referred to as a minimum required received power value in the cell. Qrxlevminoffset represents an offset for Qrxlevmin, Pcompensation represents a power compensation value, and Qoffsettemp represents an offset temporarily applied to the cell.

Qqualmin represents a measured cell quality value (measured cell RX quality value), Qqualmin represents a minimum required quality value in the cell (minimum required quality value in the cell), and Qqualminoffset represents an offset for Qqualmin.

In this embodiment of this application, the terminal device performs or skips performing measurement on the target frequency channel number depending on whether the distance between the terminal device and the at least one cell at the target frequency channel number satisfies the distance condition, where the target frequency channel number is different from the frequency channel number of the serving cell of the terminal device. In other words, for measurement on the inter-frequency frequency channel number or the inter-system frequency channel number, the terminal device performs or skips performing measurement on the target frequency channel number based on a related distance condition of the cell at the target frequency channel number, and does not perform measurement on another unrelated frequency channel number other than the target frequency channel number, thereby reducing a measurement power waste of the terminal device.

In an embodiment, performing or skipping performing measurement on the target frequency channel number depending on whether the distance between the terminal device and the at least one cell at the target frequency channel number satisfies the distance condition includes:
performing or skipping performing measurement on the target frequency channel number in the plurality of frequency channel numbers only depending on whether the distance between the terminal device and the at least one cell at the target frequency channel number satisfies the distance condition.

In this embodiment of this application, a condition for the terminal device to perform or skip performing measurement on the target frequency channel number is: The terminal device performs determining in the plurality of frequency channel numbers only depending on whether the distance between the terminal device and the at least one cell at the target frequency channel number satisfies the distance condition.

For example, it is still assumed that the frequency channel numbers indicated by the system information include five frequency channel numbers: a frequency channel number 1, a frequency channel number 2, a frequency channel number 3, a frequency channel number 4, and a frequency channel number 5, the frequency channel number of the serving cell of the terminal device is the frequency channel number 1, and the target frequency channel number is the frequency channel number 2. If the terminal device needs to determine whether to perform measurement on the frequency channel number 2, the terminal device may perform determining only depending on whether a distance between the terminal device and at least one cell at the frequency channel number 2 satisfies the distance condition, and does not need to determine whether a distance between the terminal device and a cell at another frequency channel number (for example, the frequency channel number 3, the frequency channel number 4, or the frequency channel number 5) satisfies the distance condition. In this way, a power waste of the terminal device can be reduced, and measurement efficiency of the terminal device for the target frequency channel number can be improved.

In this embodiment of this application, the terminal device specifically determines, only depending on whether the distance between the terminal device and the at least one cell at the target frequency channel number satisfies the distance condition, whether to perform measurement on the target frequency channel number in the plurality of frequency channel numbers. In the solution in this embodiment of this application, an object compared with the distance condition is the at least one cell at the target frequency channel number, but not cells at all frequency channel numbers. This can improve measurement efficiency of the terminal device for the target frequency channel number.

The foregoing describes a case in which the terminal device performs or skips performing measurement on the target frequency channel number depending on whether the distance between the terminal device and the at least one cell at the target frequency channel number satisfies the distance condition. The following specifically describes the distance condition and a corresponding determining process.

In an embodiment, performing or skipping performing measurement on the target frequency channel number depending on whether the distance between the terminal device and the at least one cell at the target frequency channel number satisfies the distance condition includes: if the distance condition is satisfied, skipping performing measurement on the target frequency channel number; or if the distance condition is not satisfied, performing measurement on the target frequency channel number.

The distance condition includes: A difference between a first distance and a second distance is less than a first threshold, where the first distance is a distance between the terminal device and a first reference point of the serving cell, and the second distance is a distance between the terminal device and a second reference point of the cell at the target frequency channel number.

The distance condition in this embodiment of this application includes that the difference between the first distance and the second distance is less than the first threshold. The distance condition may be specifically understood as follows: A difference obtained by subtracting the second distance from the first distance is less than the first threshold.

In this embodiment of this application, an example in which the first distance is d1 and the second distance is d2 is used. If the distance condition is satisfied, that is, if d1-d2<the first threshold is satisfied, the terminal device skips performing measurement on the target frequency channel number. If the distance condition is not satisfied, that is, d1-d2≥the first threshold, the terminal device performs measurement on the target frequency channel number.

In this embodiment of this application, if the distance condition is satisfied, the terminal device skips performing measurement on the target frequency channel number. This may be understood as that the terminal device may skip performing measurement on the target frequency channel number, or the terminal device is allowed not to perform measurement on the target frequency channel number, and whether to perform measurement is finally determined by the terminal device.

The first threshold in this embodiment of this application may be carried in the system information, for example, a system information block (system information block, SIB) 2.

In an embodiment, the second distance is a distance between the terminal device and the second reference points of all cells at the target frequency channel number; or the second distance is a distance between the terminal device and the second reference point of each cell at the target frequency channel number.

In this embodiment of this application, "all cells" may be understood as cells detected or measured by the UE at the target frequency channel number, or cells indicated at the target frequency channel number, and are not necessarily all cells deployed at the target frequency channel number. All cells herein are all cells learned by the UE.

"Each cell" may be understood as each cell detected or measured by the UE at the target frequency channel number, or each cell indicated at the target frequency channel number, and is not necessarily a cell deployed at the target frequency channel number. Each cell herein refers to each cell learned by the UE.

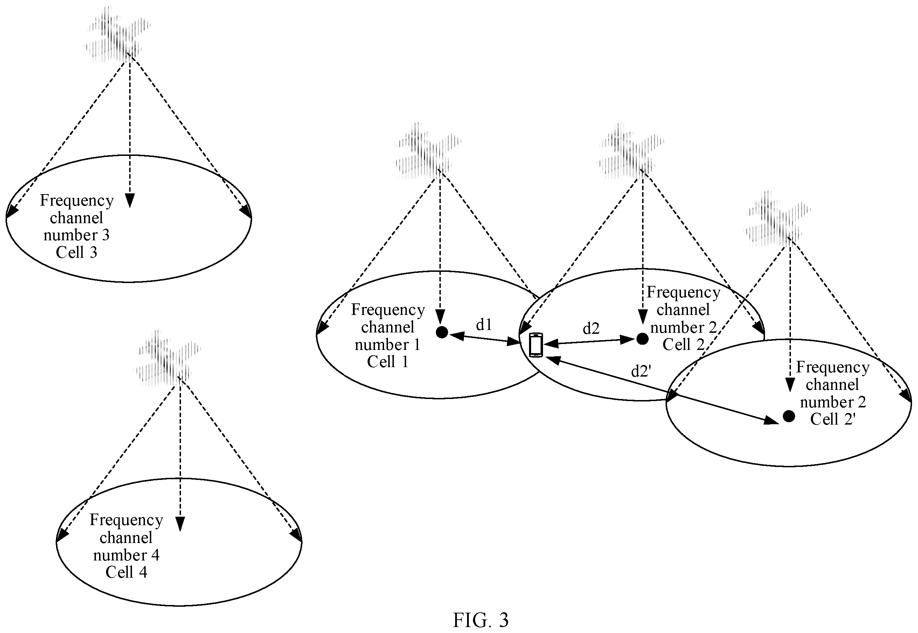

FIG. 3 is a diagram of determining, by a terminal device based on a distance condition, whether to measure quality according to this application. It is assumed that an initial position of the terminal device is in a cell 1 at the frequency channel number 1. In this case, the serving cell of the terminal device is the cell 1, and the frequency channel number of the serving cell of the terminal device is the frequency channel number 1. As the terminal device moves, the terminal device approaches or even is located in a cell 2 at the frequency channel number 2, and the terminal device may determine, depending on whether a distance between the terminal device and a cell at the frequency channel number 2 satisfies the distance condition, whether measurement on the frequency channel number 2 needs to be performed.

Specifically, cells at the frequency channel number 2 include the cell 2 and a cell 2'. When a distance between the terminal device and a first reference point of the cell 1 is d1, a distance between the terminal device and a second reference point of the cell 2 is d2, and a distance between the terminal device and a second reference point of the cell 2' is d2', if d1-d2<the first threshold and d1-d2'<the first threshold, the terminal device skips performing measurement on the frequency channel number 2. If d1-d2≥the first threshold and/or d1-d2'≥the first threshold, the terminal device performs measurement on the frequency channel number 2.

For example, it is assumed that the first threshold is 0, d1 is 85, d2 is 90, and d2' is 100. Because d1-d2=85-90=-5<0, and d1-d2'=85-100=15<0, to be specific, both distances between the terminal device and the reference points of the two cells at the frequency channel number 2 satisfy the distance condition, the terminal device skips performing measurement on the frequency channel number 2.

For another example, it is assumed that the first threshold is 0, d1 is 100, d2 is 70, and d2' is 90. Because d1-d2=100-70=30>0, to be specific, a distance between the terminal device and a reference point of at least one cell at the frequency channel number 2 does not satisfy the distance condition, the terminal device performs measurement on the frequency channel number 2.

As shown in FIG. 3, an example in which the first reference point is a central point of the serving cell and the second reference point is a central point of the cell at the target frequency channel number is used. Positions of the first reference point and the second reference point are not limited in embodiments of this application.

In an embodiment, the first reference point is at least one of the following: a subsatellite point of a satellite of the serving cell, a central point of the serving cell, and the first reference point configured by a network device; and the second reference point is at least one of the following: a subsatellite point of a satellite of the cell at the target frequency channel number, a central point of the cell at the target frequency channel number, and the second reference point configured by the network device.

In this embodiment of this application, the first reference point may be the subsatellite point of the satellite of the serving cell, and the second reference point may be the subsatellite point of the subsatellite of the cell at the target frequency channel number. The subsatellite point of the satellite refers to an intersection point between a satellite radius vector and the earth's surface. The subsatellite point is a projection of satellite motion on the earth's surface, and a trajectory of the subsatellite point is a line connecting projections of the satellite on the ground over a period of time.

In this embodiment of this application, the terminal device may obtain the subsatellite point of the satellite based on ephemeris information of the satellite.

Alternatively, the first reference point and/or the second reference point may be configured by the network device or specified in a protocol. For example, the network device configures the terminal device to use the subsatellite point, or the protocol specifies that the terminal device uses the subsatellite point.

The first reference point and/or the second reference point configured by the network device may be fixed, or may dynamically change.

It should be noted that reference points obtained according to different criteria may be the same or may be different. This is not limited. For example, the first reference point is used as an example. The subsatellite point of the satellite of the serving cell of the terminal device and the central point of the serving cell of the terminal device may be a same point or may be different points.

If the subsatellite point of the satellite of the serving cell of the terminal device and the central point of the serving cell are the same point, the terminal device calculates the first distance based on the point.

If the subsatellite point of the satellite of the serving cell of the terminal device is different from the central point of the serving cell, in an implementation, the terminal device may calculate the first distance based on any point. For example, the terminal device may calculate the first distance based on the subsatellite point of the satellite of the serving cell, or the terminal device may calculate the first distance based on the central point of the serving cell. In another implementation, the terminal device may separately calculate first distances based on the two points. For example, the terminal device may calculate a first distance based on the subsatellite point of the satellite of the serving cell, and the terminal device calculates a first distance based on the central point of the serving cell. During specific determining, the terminal device may determine both the two first distances and the second distance. If both differences between the two first distances and the second distance are less than the first threshold, the terminal device skips performing measurement on the target frequency channel number.

It should be further noted that, for a plurality of cells at the target frequency channel number, second reference points of the plurality of cells may be the same or may be different.

For example, FIG. 3 is still used as an example. The second reference point of the cell 2 at the frequency channel number 2 may be a central point of the cell 2. The second reference point of the cell 2' at the frequency channel number 2 may be a central point of the cell 2', or may be a subsatellite point of a satellite of the cell 2', or may be a point configured by the network device.

In this embodiment of this application, the distance condition includes that the difference between the first distance and the second distance is less than the first threshold. Because the second distance is the distance between the terminal device and the second reference point of the cell at the target frequency channel number, the terminal device performs or skips performing measurement on the target frequency channel number based on the distance condition, and does not perform measurement on another unrelated frequency channel number other than the target frequency channel number, thereby reducing a measurement power waste of the terminal device.

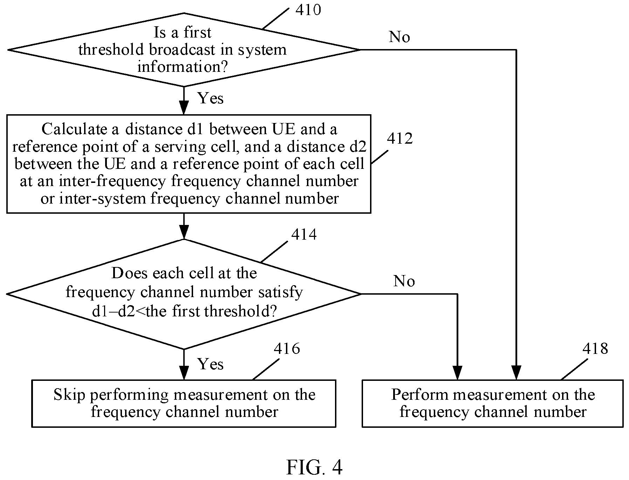

FIG. 4 is a diagram of a measurement method according to an embodiment of this application.

The measurement method includes steps 410 to 418.

410: Is a first threshold broadcast in system information?

If the first threshold is broadcast in the system information, 412 is performed.

If the first threshold is not broadcast in the system information, 418 is performed.

412: Calculate a distance d1 between UE and a reference point of a serving cell, and a distance d2 between the UE and a reference point of each cell at an inter-frequency frequency channel number or inter-system frequency channel number.

414: Does each cell at the frequency channel number satisfy d1-d2<the first threshold?

If each cell at the frequency channel number satisfies d1-d2<the first threshold, 416 is performed. 416: Skip performing measurement on the frequency channel number.

If each cell at the frequency channel number does not satisfy d1-d2<the first threshold, 418 is performed. 418: Perform measurement on the frequency channel number.

In this embodiment of this application, if the first threshold is broadcast in the system information, the terminal device calculates the distance d1 between the terminal device and the reference point of the serving cell, and calculates the distance d2 between the terminal device and the reference point of the cell at the inter-frequency frequency channel number or inter-system frequency channel number. If all cells at a specific frequency channel number in the inter-frequency frequency channel number or the inter-system frequency channel number satisfy d1-d2<the first threshold, the terminal device skips performing measurement on the frequency channel number; or if at least one cell at the frequency channel number satisfies d1-d2≥the first threshold, the terminal device performs measurement on the frequency channel number.

It should be noted that, if the terminal device needs to perform the method shown in FIG. 4, the terminal device may further obtain a satellite ephemeris of the serving cell and a satellite ephemeris corresponding to the inter-frequency frequency channel number or the inter-system frequency channel number.

It should be further noted that the terminal device may alternatively not perform step 410, and the terminal device may perform step 412 based on a case in which the first threshold is broadcast in the system information, or the terminal device may perform step 418 based on a case in which the first threshold is not broadcast in the system.

Similarly, the terminal device may alternatively not perform step 414, and the terminal device may perform step 416 based on a case in which each cell at the frequency channel number satisfies the distance condition of d1-d2<the first threshold. Alternatively, the terminal device may perform step 418 based on a case in which the at least one cell at the frequency channel number satisfies the condition of d1-d2≥the first threshold.

In an implementation of this embodiment of this application, the terminal device may perform steps 412, 414, and 416.

In another implementation of this embodiment of this application, the terminal device may perform steps 412, 414, and 418.

The foregoing embodiment involves only determining of the distance condition. In some embodiments, measurement on a target frequency channel number may be performed or not performed with reference to a quality condition and the distance condition.

In an embodiment, performing or skipping performing measurement on the target frequency channel number depending on whether a distance between the terminal device and at least one cell at the target frequency channel number satisfies the distance condition includes: when the quality condition is satisfied, performing or skipping performing measurement on the target frequency channel number depending on whether the distance between the terminal device and the at least one cell at the target frequency channel number satisfies the distance condition.

The quality condition includes: A receiving level value of the serving cell is greater than a second threshold, and a quality value of the serving cell is greater than a third threshold.

In this embodiment of this application, the quality condition includes: A receiving level value of the serving cell of the terminal device is greater than the second threshold, and a quality value of the serving cell of the terminal device is greater than the third threshold. The receiving level value of the serving cell of the terminal device may be the foregoing Srxlev, and the quality value of the serving cell of the terminal device may be the foregoing Squal.

The second threshold and the third threshold in this embodiment of this application are used to control whether to start measurement on the cell at the inter-frequency frequency channel number or the inter-system frequency channel number by the terminal device. The second threshold and the third threshold may be carried in the system information, for example, a SIB2.

In this embodiment of this application, when the quality condition is satisfied, to be specific, the receiving level value of the serving cell of the terminal device is greater than the second threshold, and the quality value of the serving cell of the terminal device is greater than the third threshold, the terminal device determines, based on the distance condition, whether to perform measurement on the target frequency channel number. When the quality condition is not satisfied, to be specific, the receiving level value of the serving cell of the terminal device is less than or equal to the second threshold, and/or the quality value of the serving cell of the terminal device is less than or equal to the third threshold, measurement on the target frequency channel number is performed.

For example, the second threshold is -120 dBm, and the third threshold is -80 dB. If the receiving level value of the serving cell of the terminal device is -100 dBm, and the quality value of the serving cell of the terminal device is -70 dB, because -100 dBm>-120 dBm, and -70 dB>-80 dB, in other words, the serving cell of the terminal device satisfies the foregoing quality condition, the terminal device may further perform or skip performing measurement on the target frequency channel number based on the distance condition.

For another example, the second threshold is still -120 dBm, and the third threshold is still -80 dB. If the receiving level value of the serving cell of the terminal device is -100 dBm, and the quality value of the serving cell of the terminal device is -90 dB, because -100 dBm>-120 dBm, but -90 dB<-80 dB, in other words, the serving cell of the terminal device does not satisfy the foregoing quality condition, the terminal device performs measurement on the target frequency channel number.

In this embodiment of this application, when the quality condition is satisfied, the terminal device further performs or skips performing measurement on the target frequency channel number depending on whether the distance between the terminal device and the at least one cell at the target frequency channel number satisfies the distance condition. This can improve accuracy of controlling, by the terminal device, starting of neighbor cell measurement, thereby increasing a success rate of cell reselection performed by the terminal device.

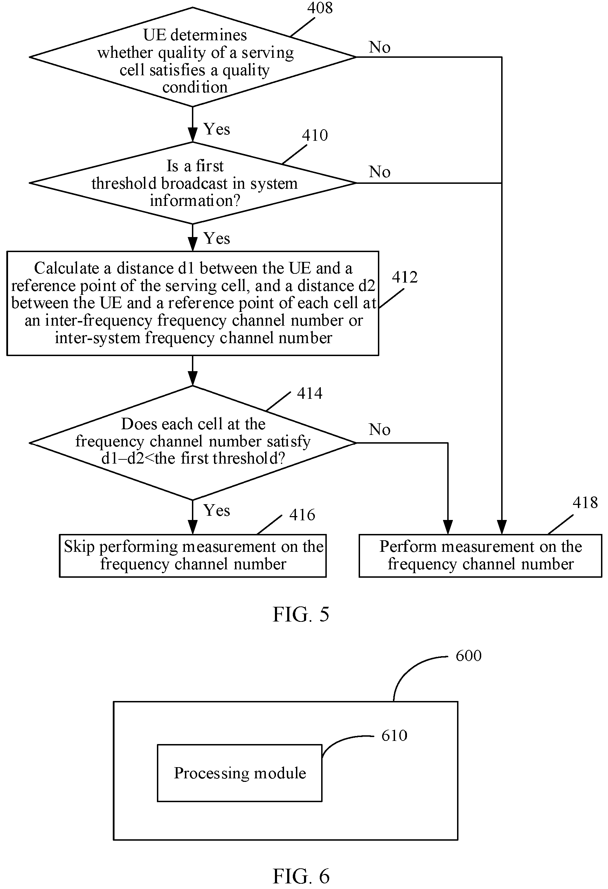

FIG. 5 is a diagram of a measurement method according to an embodiment of this application.

The measurement method includes steps 408 to 418.

408: UE determines whether quality of a serving cell satisfies a quality condition.

If the quality of the serving cell satisfies the quality condition, 410 is performed. If the quality of the serving cell does not satisfy the quality condition, 418 is performed.

For content of steps 410 to 418, refer to related descriptions in FIG. 4. Details are not described again.

In this embodiment of this application, the terminal device determines whether signal quality of the serving cell satisfies the quality condition. If the signal quality of the serving cell satisfies the quality condition, the terminal device further calculates, based on a case in which a first threshold is broadcast in system information, a distance $d1$ between the terminal device and a reference point of the serving cell, and calculates a distance $d2$ between the terminal device and a reference point of a cell at an inter-frequency frequency channel number or inter-system frequency channel number. If all cells at a specific frequency channel number in the inter-frequency frequency channel number or the inter-system frequency channel number satisfy $d1-d2<$the first threshold, the terminal device skips performing measurement on the frequency channel number; or if at least one cell at the frequency channel number satisfies $d1-d2\geq$the first threshold, the terminal device performs measurement on the frequency channel number.

It should be noted that the terminal device may alternatively not perform step 408, and the terminal device may perform step 410 based on a case in which the serving cell of the terminal device satisfies the quality condition, or the terminal device may perform step 418 based on a case in which the serving cell of the terminal device does not satisfy the quality condition.

In an embodiment, a priority of a first frequency channel number is higher than or equal to a priority of a target frequency channel number.

In this embodiment of this application, a frequency channel number of the serving cell of the terminal device is the first frequency channel number. When the priority of the first frequency channel number is higher than or equal to the priority of the target frequency channel number, the terminal device may perform or skip performing measurement on the target frequency channel number depending on whether a distance between the terminal device and at least one cell at the target frequency channel number satisfies a distance condition.

If the priority of the frequency channel number of the serving cell is lower than a priority of a frequency channel number of a neighboring cell, the frequency channel number of the neighboring cell is referred to as a high-priority frequency channel number. If the priority of the frequency channel number of the serving cell is equal to a priority of a frequency channel number of a neighboring cell, the frequency channel number of the neighboring cell is referred to as an equal-priority frequency channel number. If the priority of the frequency channel number of the serving cell is higher than a priority of a frequency channel number of a neighboring cell, the frequency channel number of the neighboring cell is referred to as a low-priority frequency channel number. In this embodiment of this application, the priority of the first frequency channel number is higher than or equal to the priority of the target frequency channel number. Therefore, the target frequency channel number may be an equal-priority frequency channel number/a low-priority frequency channel number.

In other words, compared with the first frequency channel number, if the target frequency channel number is an equal-priority frequency channel number/a low-priority frequency channel number, the terminal device may perform or skip performing measurement on the target frequency channel number based on the distance condition.

In another embodiment, the priority of the first frequency channel number is lower than the priority of the target frequency channel number. This is not limited. In this scenario, the target frequency channel number is a high-priority frequency channel number. In other words, when the target frequency channel number is a high-priority frequency channel number, the terminal device may still perform or skip performing measurement on the target frequency channel number based on the distance condition.

In most cases, the priority of the frequency channel number is broadcast in the system information. In this embodiment of this application, the target frequency channel number is different from the first frequency channel number, the priority of the first frequency channel number may be carried in a SIB2, and the priority of the target frequency channel number may be carried in a SIB4 or a SIB5.

It is pointed out in the foregoing embodiment that the terminal device may perform or skip performing measurement on the target frequency channel number based on the distance condition. The following specifically describes time in which the terminal device performs or skips performing measurement on the target frequency channel number based on the distance condition.

In an embodiment, performing or skipping performing measurement on the target frequency channel number depending on whether the distance between the terminal device and the at least one cell at the target frequency channel number satisfies the distance condition includes: periodically performing or skipping performing measurement on the target frequency channel number depending on whether the distance between the terminal device and the at least one cell at the target frequency channel number satisfies the distance condition.

In this embodiment of this application, the terminal device may periodically perform or skip performing measurement on the target frequency channel number based on the distance condition. For example, assuming that duration of one periodicity in this embodiment of this application is preset duration, the terminal device may perform or skip performing measurement on the target frequency channel number at intervals of one periodicity based on the distance condition, or may perform or skip performing measurement on the target frequency channel number at intervals of a plurality of periodicities based on the distance condition.

The preset duration in this embodiment of this application may be configured by a network device, or may be determined by the terminal device. This is not limited.

In an embodiment, periodically performing or skipping performing measurement on the target frequency channel number depending on whether the distance between the terminal device and the at least one cell at the target frequency channel number satisfies the distance condition includes: when measurement on the target frequency channel number is performed in a first periodicity, if it is determined, in a second periodicity, that the distance between the terminal device and the at least one cell at the target frequency channel number satisfies the distance condition, stopping performing measurement on the target frequency channel number, where a start moment of the second periodicity is an end moment of the first periodicity.

In this embodiment of this application, it is assumed that duration corresponding to the first periodicity is first preset duration, and duration corresponding to the second periodicity is second preset duration. FIG. 3 is used as an example. It is assumed that the target frequency channel number is a frequency channel number 2, and the first preset duration and the second preset duration each are 1s. For example, the terminal device performs measurement on the frequency channel number 2 based on the distance condition in the first preset duration from 9:00:00 to 9:00:01. In the first preset duration, the terminal device needs to perform measurement on a plurality of cells at the frequency channel number 2. It is possible that the terminal device does not complete measurement on the plurality of cells at the frequency channel number 2 by the end of the first preset duration. Therefore, for a period of time of the second preset duration, the terminal device may still determine, based on a distance condition, whether to perform measurement on the frequency channel number 2. If the terminal device determines, at the moment 9:00:01 based on the distance condition, not to perform measurement on the 2 frequency channel number 2, the terminal device may stop measuring the frequency channel number 2, thereby reducing a power waste of the terminal device.

The duration corresponding to the first periodicity and the duration corresponding to the second periodicity are not specifically limited in embodiments of this application. The duration corresponding to the first periodicity may be equal to or unequal to the duration corresponding to the second periodicity.

For example, the first periodicity includes duration of N periodicities, and the second periodicity includes duration of M periodicities. N may be equal to M, or N may be less than M, or N may be greater than M.

In an embodiment, periodically performing or skipping performing measurement on the target frequency channel number depending on whether the distance between the terminal device and the at least one cell at the target frequency channel number satisfies the distance condition includes: when measurement on the target frequency channel number is not performed in a third periodicity, if it is determined, in a fourth periodicity, that the distance between the terminal device and the at least one cell at the target frequency channel number does not satisfy the distance condition, performing measurement on the target frequency channel number, where a start moment of the fourth periodicity is an end moment of the third periodicity.

In this embodiment of this application, it is assumed that duration corresponding to the third periodicity is third preset duration, and duration corresponding to the fourth periodicity is fourth preset duration. FIG. 3 is still used as an example. It is assumed that the third preset duration and the fourth preset duration each are 1s. For example, the terminal device skips performing measurement on the frequency channel number 2 in a period of time from 10:00:00 to 10:00:01 based on the distance condition. In the third preset duration, the terminal device does not need to perform measurement on the frequency channel number 2, and the terminal device may need to perform measurement on the frequency channel number 2 at an end moment of the third preset duration, that is, a start moment of the fourth preset duration. For a period of time of the fourth preset duration, the terminal device may still determine, based on the distance condition, whether to perform measurement on the frequency channel number 2. If the terminal device determines, at the moment 10:00:01 based on the distance condition, to perform measurement on the frequency channel number 2, the terminal device may perform measurement on the frequency channel number 2, so that the terminal device can select a cell with better signal quality.

Similarly, the duration corresponding to the third periodicity and the duration corresponding to the fourth periodicity are not specifically limited in embodiments of this application. The duration corresponding to the third periodicity may be equal to or unequal to the duration corresponding to the fourth periodicity.

In conclusion, the terminal device may periodically perform or skip performing measurement on the target frequency channel number based on the distance condition, so that a power waste of the terminal device can be reduced, and the terminal device can select a cell with good signal quality when performing cell reselection.

The foregoing describes the measurement method provided in embodiments of this application. The foregoing measurement method is mainly described from a perspective of a terminal device. It can be understood that, to implement the foregoing functions, the terminal device includes a corresponding hardware structure and/or software module for performing the functions.

A person skilled in the art may be aware that, with reference to the examples described in embodiments disclosed in this specification, units and algorithm steps can be implemented by hardware or a combination of computer software and hardware in this application. Whether a specific function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

It should be understood that, in the foregoing embodiments, the terminal device may perform some or all of the steps in embodiments. These steps or operations are merely examples. Other operations or variations of various operations may be further performed in embodiments of this application. In addition, the steps may be performed in a sequence different from a sequence shown in embodiments, and not all of operations in embodiments of this application may be necessarily performed. In addition, sequence numbers of the steps do not mean an execution sequence. An execution sequence of the processes should be determined based on functions and internal logic of the processes, and should not constitute any limitation on the implementation processes of embodiments of this application.

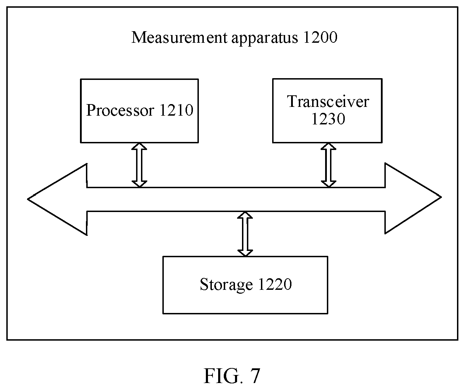

The following describes measurement apparatuses provided in embodiments of this application with reference to FIG. 6 and FIG. 7. It should be understood that descriptions of apparatus embodiments correspond to the descriptions of the method embodiments. Therefore, for content that is not described in detail, refer to the foregoing method embodiments. For brevity, some content is not described again.

In embodiments of this application, the device may be divided into functional modules based on the foregoing method examples. For example, functional modules may be obtained through division based on corresponding functions, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. An example in which each functional module is obtained through division based on each corresponding function is used below for description.

FIG. 6 is a block diagram of a measurement apparatus 600 according to an embodiment of this application. The apparatus 600 includes a processing module 610. The processing module 610 is configured to process data.

Optionally, the apparatus 600 may further include a storage module. The storage module may be configured to store instructions and/or data. The processing module 610 may read the instructions and/or the data in the storage module, so that the apparatus implements the foregoing method embodiments.

The apparatus 600 may be configured to perform an action performed by the terminal device in the foregoing method embodiments, and the processing module 610 is configured to perform processing-related operations on a terminal device side in the foregoing method embodiments.

The processing module 610 is configured to perform or skip performing measurement on a target frequency channel number depending on whether a distance between the terminal device and at least one cell at the target frequency channel number satisfies a distance condition, where the target frequency channel number is different from a first frequency channel number, the first frequency channel number is a frequency channel number of a serving cell of the terminal device, the target frequency channel number is any one of a plurality of frequency channel numbers, and the plurality of frequency channel numbers are frequency channel numbers indicated by system information.

Optionally, in some embodiments, the processing module 610 is configured to perform or skip performing measurement on the target frequency channel number in the plurality of frequency channel numbers only depending on whether the distance between the terminal device and the at least one cell at the target frequency channel number satisfies the distance condition.

Optionally, in some embodiments, the processing module 610 is configured to: if the distance condition is satisfied, skip performing measurement on the target frequency channel number; or if the distance condition is not satisfied, perform measurement on the target frequency channel number; and the distance condition includes: A difference between a first distance and a second distance is less than a first threshold, where the first distance is a distance between the terminal device and a first reference point of the serving cell, and the second distance is a distance between the terminal device and a second reference point of the cell at the target frequency channel number.

Optionally, in some embodiments, the second distance is a distance between the terminal device and the second reference points of all cells at the target frequency channel number; or the second distance is a distance between the terminal device and the second reference point of each cell at the target frequency channel number.

Optionally, in some embodiments, the first reference point is at least one of the following: a subsatellite point of a satellite of the serving cell, a central point of the serving cell, and the first reference point configured by a network device; and the second reference point is at least one of the following: a subsatellite point of a satellite of the cell at the target frequency channel number, a central point of the cell at the target frequency channel number, and the second reference point configured by the network device.

Optionally, in some embodiments, the processing module 610 is configured to: when a quality condition is satisfied, perform or skip performing measurement on the target frequency channel number depending on whether the distance between the terminal device and the at least one cell at the target frequency channel number satisfies the distance condition; and the quality condition includes: A receiving level value of the serving cell is greater than a second threshold, and a quality value of the serving cell is greater than a third threshold.

Optionally, in some embodiments, the target frequency channel number is an inter-frequency frequency channel number or an inter-system frequency channel number.

Optionally, in some embodiments, a priority of a first frequency channel number is higher than or equal to a priority of a target frequency channel number.

Optionally, in some embodiments, the first threshold is carried in the system information.

Optionally, in some embodiments, the second threshold and/or the third threshold are/is carried in the system information.

Optionally, in some embodiments, the processing module 610 is configured to periodically perform or skip performing measurement on the target frequency channel number depending on whether the distance between the terminal device and the at least one cell at the target frequency channel number satisfies the distance condition.

Optionally, in some embodiments, the processing module 610 is configured to: when measurement on the target frequency channel number is performed in a first periodicity, if it is determined, in a second periodicity, that the distance between the terminal device and the at least one cell at the target frequency channel number satisfies the distance condition, stop performing measurement on the target frequency channel number, where a start moment of the second periodicity is an end moment of the first periodicity.

Optionally, in some embodiments, the processing module 610 is configured to: when measurement on the target frequency channel number is not performed in a third periodicity, if it is determined, in a fourth periodicity, that the distance between the terminal device and the at least one cell at the target frequency channel number does not satisfy the distance condition, perform measurement on the target frequency channel number, where a start moment of the fourth periodicity is an end moment of the third periodicity.

As shown in FIG. 7, an embodiment of this application further provides a measurement apparatus 1200. The apparatus 1200 includes a processor 1210, and may further include one or more storages 1220. The processor 1210 is coupled to the storage 1220. The storage 1220 is configured to store a computer program or instructions and/or data. The processor 1210 is configured to execute the computer program or the instructions and/or the data stored in the storage 1220, so that the method in the foregoing method embodiments is performed. Optionally, the apparatus 1200 includes one or more processors 1210.

Optionally, the storage 1220 and the processor 1210 may be integrated together, or may be disposed separately.

Optionally, as shown in FIG. 7, the apparatus 1200 may further include a transceiver 1230, and the transceiver 1230 is configured to receive and/or send a signal. For example, the processor 1210 is configured to control the transceiver 1230 to receive and/or send a signal.

In a solution, the apparatus 1200 is configured to implement operations performed by the terminal device in the foregoing method embodiments.

An embodiment of this application further provides a computer-readable storage medium. The computer-readable storage medium stores computer instructions used to implement the method performed by the terminal device in the foregoing method embodiments.

For example, when the computer program is executed by a computer, the computer is caused to implement the method performed by the terminal device in the foregoing method embodiments.

An embodiment of this application further provides a computer program product including instructions. When the instructions are executed by a computer, the computer is caused to implement the method performed by the terminal device in the foregoing method embodiments.

For explanations and beneficial effects of related content in any one of the apparatuses provided above, refer to the corresponding method embodiments provided above. Details are not described herein again.

It should be understood that, the processor mentioned in embodiments of this application may be a central processing unit (central processing unit, CPU), and may alternatively be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the storage mentioned in embodiments of this application may be a volatile storage and/or a non-volatile storage. The non-volatile storage may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash storage. The volatile storage may be a random access memory (random access memory, RAM). For example, the RAM may be used as an external cache. Through example but not limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, the DSP, the ASIC, the FPGA or the another programmable logic device, the discrete gate or the transistor logic device, or the discrete hardware component, the storage (storage module) may be integrated into the processor.

It should further be noted that the storage described herein is intended to include, but is not limited to, these and any other appropriate type of storage.

A person of ordinary skill in the art may be aware that, in combination with the examples described in embodiments disclosed in this specification, units and methods may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the protection scope of this application.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to implement the solutions provided in this application.

In addition, functional units in embodiments of this application may be integrated into one unit, each of the units may exist alone physically, or two or more units may be integrated into one unit.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on a computer, the procedure or functions based on embodiments of this application are all or partially generated. The computer may be a general-purpose computer, a dedicated computer, a computer network, or other programmable apparatuses. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like. For example, the usable medium may include but is not limited to any medium that can store program code, for example, a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A measurement method, wherein the method is applied to a terminal device, and the method comprises:
performing or skipping performing measurement on a target frequency channel number depending on whether a distance between the terminal device and at least one cell at the target frequency channel number satisfies a distance condition, wherein the target frequency channel number is different from a first frequency channel number, the first frequency channel number is a frequency channel number of a serving cell of the terminal device, the target frequency channel number is any one of a plurality of frequency channel numbers, and the plurality of frequency channel numbers are frequency channel numbers indicated by system information.

2. The measurement method according to claim 1, wherein the performing or skipping performing measurement on the target frequency channel number depending on whether the distance between the terminal device and the at least one cell at the target frequency channel number satisfies the distance condition comprises:
performing or skipping performing measurement on the target frequency channel number in the plurality of frequency channel numbers only depending on whether the distance between the terminal device and the at least one cell at the target frequency channel number satisfies the distance condition.

3. The measurement method according to claim 1 or 2, wherein the performing or skipping performing measurement on the target frequency channel number depending on whether the distance between the terminal device and the at least one cell at the target frequency channel number satisfies the distance condition comprises:

   if the distance condition is satisfied, skipping performing measurement on the target frequency channel number; or
   if the distance condition is not satisfied, performing measurement on the target frequency channel number; and
   the distance condition comprises:
   a difference between a first distance and a second distance is less than a first threshold, wherein the first distance is a distance between the terminal device and a first reference point of the serving cell, and the second distance is a distance between the terminal device and a second reference point of the cell at the target frequency channel number.

4. The measurement method according to claim 3, wherein the second distance is a distance between the terminal device and the second reference points of all cells at the target frequency channel number; or
the second distance is a distance between the terminal device and the second reference point of each cell at the target frequency channel number.

5. The measurement method according to claim 3 or 4, wherein

   the first reference point is at least one of the following: a subsatellite point of a satellite of the serving cell, a central point of the serving cell, or the first reference point configured by a network device; and
   the second reference point is at least one of the following: a subsatellite point of a satellite of the cell at the target frequency channel number, a central point of the cell at the target frequency channel number, or the second reference point configured by the network device.

6. The measurement method according to any one of claims 1 to 5, wherein the performing or skipping performing measurement on the target frequency channel number depending on whether the distance between the terminal device and the at least one cell at the target frequency channel number satisfies the distance condition comprises:

   when a quality condition is satisfied, performing or skipping performing measurement on the target frequency channel number depending on whether the distance between the terminal device and the at least one cell at the target frequency channel number satisfies the distance condition; and
   the quality condition comprises:
   a receiving level value of the serving cell is greater than a second threshold, and a quality value of the serving cell is greater than a third threshold.

7. The measurement method according to any one of claims 1 to 6, wherein the target frequency channel number is an inter-frequency frequency channel number or an inter-system frequency channel number.

8. The measurement method according to any one of claims 1 to 7, wherein a priority of the first frequency channel number is higher than or equal to a priority of the target frequency channel number.

9. The measurement method according to any one of claims 3 to 5, wherein the first threshold is carried in the system information.

10. The measurement method according to claim 6, wherein the second threshold and/or the third threshold are/is carried in the system information.

11. The measurement method according to any one of claims 1 to 10, wherein the performing or skipping performing measurement on the target frequency channel number depending on whether the distance between the terminal device and the at least one cell at the target frequency channel number satisfies the distance condition comprises: periodically performing or skipping performing measurement on the target frequency channel number depending on whether the distance between the terminal device and the at least one cell at the target frequency channel number satisfies the distance condition.

12. The measurement method according to claim 11, wherein the periodically performing or skipping performing measurement on the target frequency channel number depending on whether the distance between the terminal device and the at least one cell at the target frequency channel number satisfies the distance condition comprises: when measurement on the target frequency channel number is performed in a first periodicity, if it is determined, in a second periodicity, that the distance between the terminal device and the at least one cell at the target frequency channel number satisfies the distance condition, stopping performing measurement on the target frequency channel number, wherein a start moment of the second periodicity is an end moment of the first periodicity.

13. The measurement method according to claim 11, wherein the periodically performing or skipping performing measurement on the target frequency channel number based on the preset distance condition comprises: when measurement on the target frequency channel number is not performed in a third periodicity, if it is determined, in a fourth periodicity, that the distance between the terminal device and the at least one cell at the target frequency channel number does not satisfy the distance condition, performing measurement on the target frequency channel number, wherein a start moment of the fourth periodicity is an end moment of the third periodicity.

14. A measurement apparatus, wherein the measurement apparatus comprises a processing module; and the processing module is configured to perform or skip performing measurement on a target frequency channel number depending on whether a distance between a terminal device and at least one cell at the target frequency channel number satisfies a distance condition, wherein the target frequency channel number is different from a first frequency channel number, the first frequency channel number is a frequency channel number of a serving cell of the terminal device, the target frequency channel number is any one of a plurality of frequency channel numbers, and the plurality of frequency channel numbers are frequency channel numbers indicated by system information.

15. The measurement apparatus according to claim 14, wherein the processing module is specifically configured to: perform or skip performing measurement on the target frequency channel number in the plurality of frequency channel numbers only depending on whether the distance between the terminal device and the at least one cell at the target frequency channel number satisfies the distance condition.

16. The measurement apparatus according to claim 14 or 15, wherein the processing module is specifically configured to:

if the distance condition is satisfied, skip performing measurement on the target frequency channel number; or if the distance condition is not satisfied, perform measurement on the target frequency channel number; and the distance condition comprises: a difference between a first distance and a second distance is less than a first threshold, wherein the first distance is a distance between the terminal device and a first reference point of the serving cell, and the second distance is a distance between the terminal device and a second reference point of the cell at the target frequency channel number.

17. The measurement apparatus according to claim 16, wherein the second distance is a distance between the terminal device and the second reference points of all cells at the target frequency channel number; or
the second distance is a distance between the terminal device and the second reference point of each cell at the target frequency channel number.

18. The measurement apparatus according to claim 16 or 17, wherein

the first reference point is at least one of the following: a subsatellite point of a satellite of the serving cell, a central point of the serving cell, or the first reference point configured by a network device; and
the second reference point is at least one of the following: a subsatellite point of a satellite of the cell at the target frequency channel number, a central point of the cell at the target frequency channel number, or the second reference point configured by the network device.

19. The measurement apparatus according to any one of claims 14 to 18, wherein the processing module is specifically configured to:

when a quality condition is satisfied, perform or skip performing measurement on the target frequency channel number depending on whether the distance between the terminal device and the at least one cell at the target frequency channel number satisfies the distance condition; and
the quality condition comprises:
a receiving level value of the serving cell is greater than a second threshold, and a quality value of the serving cell is greater than a third threshold.

20. The measurement apparatus according to any one of claims 14 to 19, wherein the target frequency channel number is an inter-frequency frequency channel number or an inter-system frequency channel number.

21. The measurement apparatus according to any one of claims 14 to 20, wherein a priority of the first frequency channel number is higher than or equal to a priority of the target frequency channel number.

22. The measurement apparatus according to any one of claims 16 to 18, wherein the first threshold is carried in the system information.

23. The measurement apparatus according to claim 19, wherein the second threshold and/or the third threshold are/is carried in the system information.

24. The measurement apparatus according to any one of claims 14 to 23, wherein the processing module is specifically configured to:
periodically perform or skip performing measurement on the target frequency channel number depending on whether the distance between the terminal device and the at least one cell at the target frequency channel number satisfies the distance condition.

25. The measurement apparatus according to claim 24, wherein the processing module is specifically configured to:
when measurement on the target frequency channel number is performed in a first periodicity, if it is determined, in a second periodicity, that the distance between the terminal device and the at least one cell at the target frequency channel number satisfies the distance condition, stop performing measurement on the target frequency channel number, wherein a start moment of the second periodicity is an end moment of the first periodicity.

26. The measurement apparatus according to claim 24, wherein the processing module is specifically configured to:
when measurement on the target frequency channel number is not performed in a third periodicity, if it is determined, in a fourth periodicity, that the distance between the terminal device and the at least one cell at the target frequency channel number does not satisfy the distance condition, perform measurement on the target frequency channel number, wherein a start moment of the fourth periodicity is an end moment of the third periodicity.

27. A computer-readable storage medium, wherein the computer-readable storage medium stores computer instructions, and when the computer instructions are run on a packet transmission apparatus, the apparatus is caused to perform the method according to any one of claims 1 to 13.

System 100

FIG. 1

Perform or skip performing measurement on a target frequency channel number depending on whether a distance between a terminal device and at least one cell at the target frequency point satisfies a distance condition, where the target frequency channel number is different from a first frequency channel number, the first frequency channel number is a frequency channel number of a serving cell of the terminal device, the target frequency channel number is any one of a plurality of frequency channel numbers, and the plurality of frequency channel numbers are frequency channel numbers indicated by system information

210

FIG. 2

Frequency channel number 3
Cell 3

Frequency channel number 4
Cell 4

Frequency channel number 1
Cell 1

Frequency channel number 2
Cell 2

Frequency channel number 2
Cell 2'

d1

d2

d2'

EP 4 780 025 A1

FIG. 3

```
                                                     410

              Is a first
        threshold broadcast in system          No
              information?

                    │ Yes
                    ▼
   Calculate a distance d1 between UE and a
   reference point of a serving cell, and a distance d2    412
   between the UE and a reference point of each cell
   at an inter-frequency frequency channel number
   or inter-system frequency channel number

                    │
                    ▼
                                              414

              Does each cell at the
        frequency channel number satisfy     No
            d1−d2<the first threshold?

              │ Yes          416
              ▼                                    418
   Skip performing measurement on the       Perform measurement on the
        frequency channel number                frequency channel number
```

FIG. 4

UE determines whether quality of a serving cell satisfies a quality condition — 408

No

Yes

Is a first threshold broadcast in system information? — 410

No

Yes

Calculate a distance d1 between the UE and a reference point of the serving cell, and a distance d2 between the UE and a reference point of each cell at an inter-frequency frequency channel number or inter-system frequency channel number — 412

Does each cell at the frequency channel number satisfy d1–d2<the first threshold? — 414

No

Yes — 416

Skip performing measurement on the frequency channel number

Perform measurement on the frequency channel number — 418

FIG. 5

— 600

Processing module — 610

FIG. 6

Measurement apparatus 1200

Processor 1210

Transceiver 1230

Storage 1220

FIG. 7

## INTERNATIONAL SEARCH REPORT

| International application No. |
| --- |
| **PCT/CN2024/119568** |

**A. CLASSIFICATION OF SUBJECT MATTER**

H04W4/02(2018.01)i

According to International Patent Classification (IPC) or to both national classification and IPC

**B. FIELDS SEARCHED**

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNTXT, WPABS, WPABSC, ENTXTC, VEN, VCN, 3GPP: 测量, 频点, 功耗, 服务小区, 距离, 阈值, 系统信息, 周期性, 起始, 优先级, measurement, frequency, power, consumption, serving cell, distance, threshold, system information, period, priority

**C. DOCUMENTS CONSIDERED TO BE RELEVANT**

| Category* | Citation of document, with indication, where appropriate, of the relevant passages | Relevant to claim No. |
| --- | --- | --- |
| X | WO 2022199430 A1 (HUAWEI TECHNOLOGIES CO., LTD.) 29 September 2022 (2022-09-29) description, page 1, paragraph 6 to page 6, paragraph 13 | 1-27 |
| X | CN 111800842 A (VIVO COMMUNICATION TECHNOLOGY CO., LTD.) 20 October 2020 (2020-10-20) description, paragraphs [0043]-[0159] | 1-27 |
| A | CN 116235548 A (GUANGDONG OPPO MOBILE COMMUNICATIONS CO., LTD.) 06 June 2023 (2023-06-06) entire document | 1-27 |
| A | CN 115696391 A (SPREADTRUM COMMUNICATIONS (SHANGHAI) CO., LTD.) 03 February 2023 (2023-02-03) entire document | 1-27 |

☐ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **29 November 2024** | **23 December 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/119568**

| Patent document cited in search report | | | Publication date (day/month/year) | Patent family member(s) | | | Publication date (day/month/year) |
|---|---|---|---|---|---|---|---|
| WO | 2022199430 | A1 | 29 September 2022 | CN | 115134740 | A | 30 September 2022 |
| CN | 111800842 | A | 20 October 2020 | WO | 2021027546 | A1 | 18 February 2021 |
| | | | | US | 2022167201 | A1 | 26 May 2022 |
| | | | | EP | 4017130 | A1 | 22 June 2022 |
| | | | | KR | 20220048004 | A | 19 April 2022 |
| CN | 116235548 | A | 06 June 2023 | WO | 2022067760 | A1 | 07 April 2022 |
| | | | | EP | 4224927 | A1 | 09 August 2023 |
| | | | | US | 2023269617 | A1 | 24 August 2023 |
| CN | 115696391 | A | 03 February 2023 | WO | 2023004965 | A1 | 02 February 2023 |
| | | | | US | 2024334274 | A1 | 03 October 2024 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311290092